# FASCICULE DE BREVET EUROPEEN

(11) **EP 2 488 278 B1**
(45) Date de publication et mention de la délivrance du brevet: **20.08.2014**
(21) Numéro de dépôt: 10763797.7
(22) Date de dépôt: 02.09.2010
(51) Int. Cl.: B01D 53/00, B01D 53/62, F25J 3/06

(54) **PROCÉDÉ DE PRODUCTION D'AU MOINS UN GAZ PAUVRE EN CO2 ET D'AU MOINS UN FLUIDE RICHE EN CO2**
VERFAHREN ZUR HERSTELLUNG VON MINDESTENS EINEM GAS MIT NIEDRIGEM CO2-GEHALT UND MINDESTENS EINER FLÜSSIGKEIT MIT HOHEM CO2-GEHALT
METHOD FOR PRODUCING AT LEAST ONE GAS HAVING A LOW CO2 CONTENT AND AT LEAST ONE FLUID HAVING A HIGH CO2 CONTENT

(30) Priorité: 02.09.2009 FR 0955972
(43) Date de publication de la demande: 22.08.2012
(73) Titulaire: L'Air Liquide Société Anonyme pour l'Etude et l'Exploitation des Procédés Georges Claude, 75007 Paris (FR)
(72) Inventeur: MONEREAU, Christian, F-34000 Montpellier (FR); BOURHY-WEBER, Claire, F-92150 Suresnes (FR); LOCKWOOD, Frederick, F-75010 Paris (FR); TRANIER, Jean-Pierre, F-94240 L'hay-les-Roses (FR); WAGNER, Marc, F-94100 Saint Maur Des Fosses (FR)
(74) Mandataire: Mercey, Fiona Susan
(86) Numéro de dépôt international: PCT/FR2010/051825
(87) Numéro de publication internationale: WO 2011/027079

(56) Documents cités:
- WO-A1-99/42773
- GB-A- 1 352 140
- US-A- 5 802 872
- US-A1- 2007 277 674
- US-A1- 2007 292 306

## Description

La présente invention concerne un procédé de production d'au moins un gaz pauvre en CO₂ et d'au moins un fluide riche en CO₂. En particulier elle concerne un procédé de capture de dioxyde dans un fluide contenant au moins un composé plus volatil que le dioxyde de carbone comme par exemple le méthane CH₄, l'oxygène O₂, l'argon Ar, l'azote N₂, le monoxyde de carbone CO, l'hélium He et/ou l'hydrogène H₂.

Cette invention peut s'appliquer notamment aux unités de production d'électricité et/ou de vapeur à partir de combustibles carbonés tels que le charbon, les hydrocarbures (gaz naturel, fuel, résidus pétroliers,...), les ordures ménagères, la biomasse mais aussi à des gaz de raffineries, d'usines chimiques, d'usines sidérurgiques ou de cimenteries, au traitement du gaz naturel en sortie de puits de production. Elle pourrait aussi s'appliquer à des gaz d'échappement de véhicules de transport voire aux fumées de chaudières servant au chauffage de bâtiments.

Le dioxyde de carbone est un gaz à effet de serre qui lorsqu'il est émis dans l'atmosphère peut être cause du réchauffement climatique. Afin de résoudre ce problème environnemental, une solution consiste à capturer c'est-à-dire produire un fluide enrichi en dioxyde de carbone qui pourra être plus facilement séquestré.

Les liquéfacteurs de CO₂ utilisent aujourd'hui des échangeurs tubulaires et il n'existe pas d'échangeurs permettant de traiter des débits importants (supérieurs à environ 1000 tonnes/jour). Dans le domaine de la cryogénie, les unités de séparation de gaz de l'air utilisent des échangeurs en aluminium brasé, qui sont certes compacts mais relativement coûteux (aluminium) et génèrent des pertes de charges importantes.

Un but de la présente invention est de proposer un procédé amélioré de capture du dioxyde de carbone à partir d'un fluide contenant du CO₂ et au moins un composé plus volatile que celui-ci, mettant en oeuvre un ou plusieurs échangeurs cryogéniques capables de traiter des débits très important (de l'ordre du million de Nm³/h, avec 1 Nm³ représentant un mètre cube pris à une température de 0°C et une pression de 1 atmosphère), avec des écarts de température et des pertes de charges faible et un coût réduit par rapport aux échangeurs classiques en aluminium brasé.

Un procédé selon le préambule de la revendication 1 est connu de US-A-2007/277674.

L'invention concerne un procédé selon la revendication 1.

Le fluide à traiter provient en général d'une chaudière ou de toute installation produisant des fumées. Ces fumées peuvent avoir subi plusieurs pré-traitements, notamment pour enlever les NOx (oxydes d'azote), les poussières, les SOx (oxydes de soufre) et/ou l'eau.

Avant la séparation, le fluide à traiter est soit monophasique, sous forme gazeuse ou liquide, soit polyphasique. Il contient du CO₂ que l'on souhaite séparer des autres constituants dudit fluide. Ces autres constituants comprennent au moins un ou plusieurs composés plus volatils que le dioxyde de carbone au sens de la condensation, par exemple le méthane CH₄, l'oxygène O₂, l'argon Ar, l'azote N₂, le monoxyde de carbone CO, l'hélium He et/ou l'hydrogène H₂. Les fluides à traiter comprennent en général majoritairement de l'azote, ou majoritairement du CO ou majoritairement de l'hydrogène. La teneur en CO₂ peut varier de quelques centaines de ppm (parties par million) de CO₂ à plusieurs dizaines de pourcents.

A l'étape a) le fluide à traiter est refroidi en général sans changement d'état. Les inventeurs ont montré qu'il est particulièrement avantageux de réaliser ce refroidissement au moins en partie par échange de chaleur avec au moins une fraction du gaz pauvre en CO₂ issu du procédé de séparation objet de l'étape b) et ce dans un ou plusieurs échangeurs de type régénératif. De manière complémentaire, le refroidissement peut se faire dans un ou plusieurs autres échangeurs multifluides par échange de chaleur avec les fluides riches en CO₂ issus du procédé de séparation.

L'étape a) de refroidissement du fluide à traiter comprend trois sous-étapes. La première (étape a1) consiste à diviser ce fluide au moins un premier débit et un second débit. Dans la deuxième (étape a2), le premier débit est envoyé dans un ou plusieurs échangeurs régénératifs mis en froid par passage d'au moins une fraction du fluide pauvre en CO₂ issue de l'étape b) et le second débit est envoyé dans un ou plusieurs échangeurs multifluides, parcourus notamment par au moins une partie des fluides riches en CO₂ et froids issus de l'étape b). Dans la troisième (étape a3), les premier et second débits de fluide à traiter, une fois refroidis, sont réunis avant d'être envoyés à l'étape b).

Les échangeurs régénératifs sont des échangeurs où le fluide chaud cède une partie de son énergie à une matrice. Le passage intermittent, fluide chaud puis fluide froid, sur la matrice permet l'échange de chaleur entre les deux fluides. On classe dans cette catégorie de régénérateurs les échangeurs à matrice tournante et les échangeurs statiques ou à valves. Ce sont des échangeurs compacts avec une grande surface d'échange du fait de la porosité de la matrice. Ils sont moins coûteux à surface égale et s'encrassent moins du fait du balayage alternatif. Par contre, le mouvement mécanique de la matrice ou le jeu de valves peuvent entraîner des pannes et un mélange partiel des fluides chaud et froid.

Les échangeurs régénérateurs rotatifs à matrice tournante présentent deux types d'écoulement :
- un écoulement axial où la matrice est constituée d'un disque dont l'axe de rotation est parallèle à l'écoulement ;
- un écoulement radial où la matrice est constituée d'un tambour tournant suivant un axe perpendiculaire à l'écoulement.

Dans les échangeurs régénérateurs statiques (ou à valves), les matrices sont alternativement parcourues par les courants chaud et froid. Ces régénérateurs sont très répandus en sidérurgie ou dans l'industrie du verre. La récupération de chaleur sur les fumées sortant du four de fusion du verre s'effectue avec des régénérateurs statiques à matrice ordonnée, en pièces céramiques. Chaque échangeur est traversé successivement par les fumées chaudes et l'air comburant à préchauffer. Le chauffage continu du bain de verre est assuré par un groupement des régénérateurs par paire. La permutation des deux gaz est périodique (inversion toutes les trente minutes environ). Sur site industriel, la durée totale d'une campagne de production est comprise entre 4 et 12 années sans arrêt. Les matériaux utilisés sont donc résistants à la corrosion à haute température. Les régénérateurs sont conçus pour éviter un bouchage trop rapide des passages de fluide. Le montage des pièces réfractaires de la matrice de stockage est parfaitement ordonné.

Dans le cas présent, la matrice (parties internes) de l'échangeur sont périodiquement refroidies par le passage d'au moins une partie du gaz pauvre en CO₂ issu de l'étape b) de séparation, puis elles sont chauffées par le passage du fluide à traiter. L'échange de chaleur entre les deux fluides est indirect. Le fluide chaud transmet de l'énergie thermique à la matrice de l'échangeur, tandis que le fluide froid la prend, de sorte qu'il y a régénération périodique de l'échangeur. Si l'on souhaite un échange de chaleur continu, il est nécessaire de diviser l'échangeur au moins deux secteurs selon des modalités connues de l'homme du métier. Pendant qu'un secteur cède la chaleur au fluide froid qui le parcourt, l'autre secteur prend de la chaleur au fluide à traiter qui le parcourt, et les rôles alternent.

Les échangeurs multifuides sont réalisables aussi bien sur matrice tournantes (multiples secteurs dédiés à chacun des fluides) qu'en matrice statique.

Ainsi, une partie du refroidissement du fluide à traiter opéré à l'étape a) a lieu dans un ou plusieurs échangeurs régénératifs, ce qui permet de réduire les pertes de charges et donc l'énergie consommée, donc de réduire son coût. Par « une partie du refroidissement », on veut dire qu'une fraction de la chaleur à céder pour obtenir le refroidissement en question est cédée dans un ou plusieurs échangeurs de type régénératifs. A cette fin, le fluide à traiter peut être physiquement divisé et une partie seulement est envoyée aux échangeurs régénératifs. On peut aussi ne réaliser qu'une partie de la descente en froid dans ces échangeurs régénératifs. Selon un mode particulier, au moins 75% du transfert de chaleur nécessaire au refroidissement est effectué dans les échangeurs régénératifs. Ceci peut être réalisé en faisant passer dans ces échangeurs 75% en masse du fluide à traiter.

L'étape b) comprend la séparation à basse température du fluide à traiter après son refroidissement à l'étape a). Par basse température, on entend ici entre 0°c et -150°C. Cette séparation est en général isobare. Cette séparation produit au moins le fluide pauvre en CO₂ qui sert pour le refroidissement opéré à l'étape a), ainsi qu'un ou plusieurs fluides riches en CO₂.

Selon des aspects particuliers de la présente invention, celle-ci peut présenter l'une ou plusieurs des caractéristiques suivantes :
- ledit premier débit obtenu par division à la sous-étape a1) représente au moins 75% en fraction massique dudit fluide à traiter.
- on ajoute à ladite fraction de gaz pauvre en CO₂ envoyée dans lesdits échangeurs régénératifs un fluide donné.
- lesdits échangeurs régénératifs sont à matrices fixes et à circulation radiale.
- lesdits échangeurs régénératifs contiennent des billes de quartz.
- ladite étape b) est de type cryocondensation liquide ou solide, absorption, adsorption, et/ou perméation. Ces types de séparation peuvent être mis en oeuvre séparément ou en combinaison les uns avec les autres.
- lesdits échangeurs régénératifs sont composés de matériaux compatibles avec le mercure.

De manière avantageuse, la fraction de fluide à traiter refroidi dans un ou plusieurs échangeurs régénératifs, c'est à dire le premier débit de fluide à traiter mentionné ci-dessus, représente au moins 75% en masse du fluide à traiter. Cette fraction est de préférence adaptée au débit de gaz pauvre en CO₂ envoyée dans les échangeurs régénératifs de manière à minimiser les écarts de température dans les échangeurs en question. Selon un mode particulier, la totalité du fluide à traiter est refroidie dans un ou plusieurs échangeurs régénératifs.

Afin d'améliorer l'échange dans les échangeurs régénératifs, on peut ajouter un fluide externe dont on disposerait au gaz pauvre en CO₂ préalablement à son introduction dans les échangeurs régénératifs. De préférence, ce fluide additionnel est lui-même pauvre en CO₂. Sa température est de préférence comprise entre celle du gaz pauvre en CO₂ issue de l'étape b) et celle du fluide à traiter ou du premier débit issu de l'étape a1).

Le lit radial présente de faibles pertes de charge pour de gros débits volumes à traiter. Les billes de quartz est un exemple de matériau utilisable pour la matrice, compatible avec la présence de mercure dans le fluide à traiter et peu coûteux.

L'étape b) de séparation peut être de différents types. En particulier, il peut s'agir d'une cryocondensation liquide ou solide. La cryocondensation solide consiste à solidifier du CO₂ initialement gazeux en portant le fluide à traiter à une température en dessous du point triple du CO₂, alors que la pression partielle du CO₂ dans le fluide à traiter est inférieure à celle du point triple du CO₂. Par exemple, la pression totale du fluide à traiter est proche de la pression atmosphérique. Cette opération de solidification est parfois appelée « désublimation » ou « anti-sublimation » du CO₂ et par extension du fluide à traiter.

Certains composés plus volatils que le CO₂ ne se solidifient pas et restent à l'état gazeux. Avec le CO₂ non solidifié, ils vont constituer ledit gaz pauvre en CO₂, c'est à dire comprenant moins de 50% de CO₂ en volume et préférentiellement moins de 10% CO₂ en volume. Selon un mode particulier, ledit gaz pauvre en CO₂ comprend plus de 1% de CO₂ en volume. Selon un autre mode particulier, il en comporte plus de 2%. Selon un autre mode particulier, il en comporte plus de 5%. Il se forme un solide comprenant majoritairement du CO₂, c'est à dire au moins 90% en volume ramené à l'état gazeux, préférentiellement au moins 95% en volume et encore plus préférentiellement au moins 99% de CO₂ en volume.

Ce solide peut comporter d'autres composés que du CO₂. On peut citer par exemple d'autres composés qui se seraient également solidifiés, ou bien des bulles et/ou des gouttes de fluide prises en masse dans ledit solide. Ceci explique que le solide puisse ne pas être purement constitué de CO₂ solide. Ce « solide » peut comporter des parties non solides telles que des inclusions fluides (gouttes, bulles, etc.).

Ce solide est ensuite isolé des composés non solidifiés après la cryo-condensation et récupéré. Puis, il est ramené à des conditions de température et de pression telles qu'il passe à un état fluide, liquide et/ou gazeux. Il peut donc se produire une liquéfaction d'au moins une partie dudit solide. Celui-ci donne ainsi naissance à un ou plusieurs un fluides primaires riches en CO₂. Ces fluides sont dits « primaires » pour les distinguer de fluides procédé qui sont dits «secondaires». Par «riche en CO₂», il faut entendre «comprenant majoritairement du CO₂ » au sens défini ci-dessus.

La cryocondensation liquide consiste à liquéfier du CO₂ initialement gazeux en portant le fluide à traiter à basse température mais en restant de préférence à une température au dessus de celle du point triple du CO₂, alors que la pression partielle du CO₂ dans le fluide à traiter est supérieure à celle du point triple du CO₂.

L'étape b) peut aussi comprendre un procédé d'absorption (par exemple avec du méthanol), d'adsorption (procédés de type TSA, PSA, VPSA, VSA, PTSA,...) et/ou de perméation (par exemple avec des membranes de type polymères).

Contrairement aux échangeurs classiques, les échangeurs régénératifs n'ont pas besoin d'être construits en aluminium brasé pour être efficaces en terme d'échange de chaleur. Ceci constitue un avantage substantiel lorsque du mercure élémentaire (Hg) ou ses composés sont présents dans le fluide à traiter. C'est le cas par exemple lorsque le fluide à traiter provient de la combustion de charbon ou de certains produits pétroliers lourds. En effet, il faut alors enlever le mercure présent dans les fluides vus par un échangeur en aluminium, ce matériau étant corrodé par le mercure. Cette opération n'est plus nécessaire pour un échangeur dont les matériaux sont compatibles avec le mercure, c'est à dire non corrodés dans les conditions de fonctionnement de l'échangeur. Selon l'invention, au moins une partie de l'échange opéré à l'étape a) est réalisé dans un ou plusieurs échangeurs régénératifs, de préférence compatibles avec le mercure, de sorte qu'il y a moins de mercure à extraire. Il n'y a plus de nécessité d'enlever le mercure si tout le fluide à traiter passe par des échangeurs régénératifs.

L'invention sera mieux comprise à la lecture de la description et des exemples suivants, qui ne sont pas limitatifs. Ils se réfèrent aux dessins annexés, sur lesquels :
- la figure 1 montre une installation de production d'électricité sur base charbon avec unités d'épuration des fumées,
- la figure 2 montre une unité d'épuration des fumées en CO₂ à basse température selon l'invention.

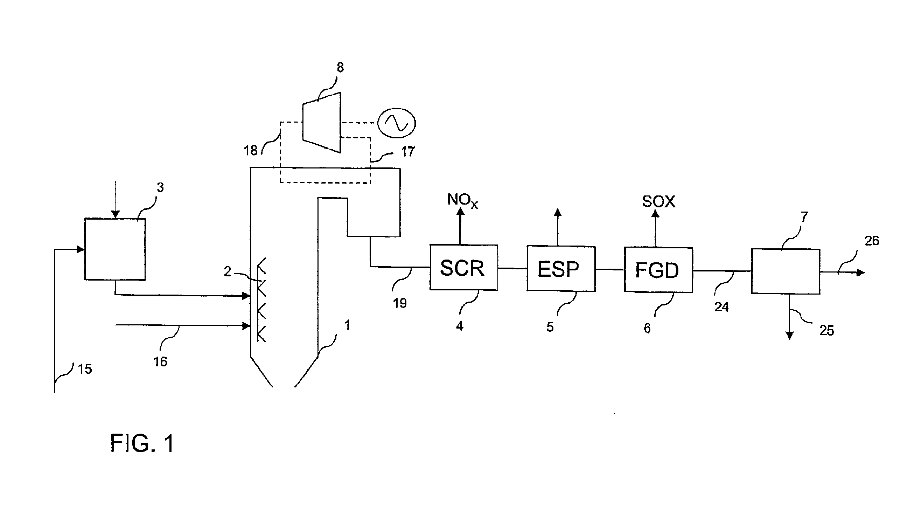

La figure 1 est une vue schématique d'une installation de production d'électricité à partir de charbon. Un débit d'air primaire 15 passe par les unités 3 où le charbon 14 est pulvérisé et entraîné vers les brûleurs de la chaudière 1. Un débit d'air secondaire 16 est fourni directement aux brûleurs afin d'apporter un complément d'oxygène nécessaire pour une combustion quasi-complète du charbon. De l'eau 17 est envoyée à la chaudière 1 pour produire de la vapeur 18 qui est détendue dans une turbine 8 et condensée dans un condenseur 9. Des fumées 19 contenant de l'azote, du CO₂, de la vapeur d'eau et d'autres impuretés subissent plusieurs traitements pour enlever certaines des dites impuretés. L'unité 4 enlève les NOx par exemple par catalyse en présence d'ammoniac. L'unité 5 enlève les poussières par exemple par filtre électrostatique et l'unité 6 est un système de désulfurisation pour enlever le SO₂ et/ou le SO₃. Les unités 4 et 6 peuvent être superflues selon la composition du produit requis. Le débit épuré 24 provenant de l'unité 6 (ou 5 si 6 n'est pas présent) est envoyé à une unité de purification à basse température 7 par cryocondensation pour produire un débit de CO₂ relativement pur 25 et un débit résiduaire 26 enrichi en azote. Cette unité 7 est aussi appelée unité de capture de CO₂.

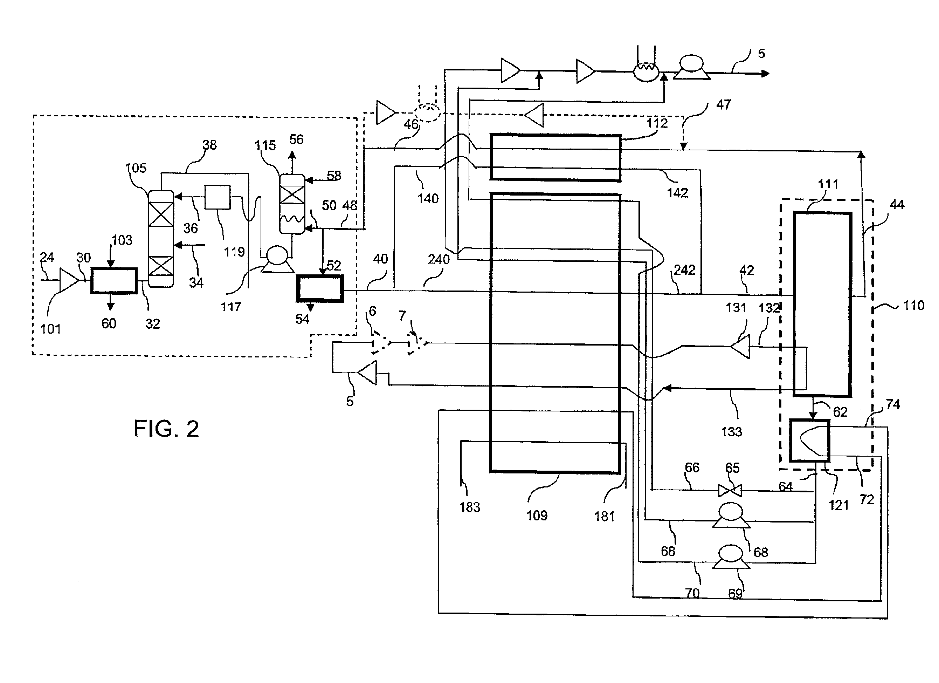

La figure 2 est une vue schématique de l'unité de compression et d'épuration 7 de la figure 1. Les éléments suivants sont présents :
- compression du fluide fumées 24 dans un compresseur 101 notamment pour compenser les pertes de charges sur les différents équipements de l'unité : cette compression peut être réalisée à l'amont (dans ce cas, elle peut aussi être combinée avec la compression dite de tirage de la chaudière), entre 2 équipements ou à l'aval de l'unité 7 ;
- filtration fine 103 du fluide 30 à des niveaux inférieurs à 1 mg/m3 des particules solides, de préférence inférieurs à 100 µg/m3 avec élimination de poussière 60
- refroidissement du fluide 32 à une température proche de 0°C (entre 0°C et 10°C) de manière à condenser la vapeur d'eau qu'il contient : ce refroidissement peut être réalisé par contact direct (par exemple, tour avec injection d'eau à deux niveaux eau froide 36 et eau à température proche de l'ambiante 34 avec ou sans garnissages) ou indirect
- unité d'élimination de la vapeur d'eau résiduelle 107 par exemple :
   ∘ adsorption sur lits fixes, lits fluidisés et/ou sécheur rotatif, l'adsorbant pouvant être de l'alumine activée, du gel de silice ou un tamis moléculaire (3A, 4A, 5A, 13X,...)
   ∘ cryocondensation dans un échangeur à contact direct ou indirect ;
- refroidissement du fluide 40 dans un échangeur 109 où le fluide est refroidi à une température proche mais de préférence supérieure à la température de solidification du CO₂ située aux environs de -100°C si la teneur en CO₂ du fluide est de l'ordre de 15% et la pression proche de la pression atmosphérique
- on divise l'échangeur 109 en plusieurs échangeurs en parallèle, notamment en ayant un échangeur 112 dans lequel une fraction importante du fluide 40 échange avec une fraction importante du fluide 44 ;
- l'échangeur 112 est type régénératif, préférablement dans les configurations suivantes :
   ∘ échangeur rotatif
   ∘ échangeur à lits fixes notamment à lits radiaux dans lequel le fluide froid rentre à l'intérieur

Par ailleurs, on peut chercher à augmenter le débit de 46 pour équilibrer l'échange avec la totalité du fluide 40 ou adapter la fraction du fluide 40 de manière à équilibrer l'échange avec la totalité du fluide 46.

Il est également possible d'utiliser un échangeur de type rotatif pour effectuer l'échange de chaleur qui permet à apporter le froid au fluide de procédé (42) en dessous de la température de cryocondensation de CO₂ (typiquement environ -100°C pour un gaz contenant environ 15% CO₂ par volume).

Les échangeurs rotatifs permettent à un échange particulièrement efficace de chaleur avec un volume d'échangeur réduit entre deux fluides de pression et composition similaires. Comme les quantités importantes de chaleur sont échangées dans le procédé de cryocondensation de CO₂, une optimisation du procédé nécessite une optimisation de cette étape en cherchant à réduire le coût (moins de volume et matériaux moins chers et les pertes de charges tout en conservant des écarts de températures raisonnables.
- échangeur 111 de cryocondensation solide d'au moins une partie du CO₂ contenu dans le fluide 42 de manière à produire un fluide appauvri en CO₂ 44 par exemple à une température de l'ordre de -120°C ; cette température est choisi en fonction du taux de capture visée ; avec une telle température la teneur dans le fluide 44 est de l'ordre de 1.5% soit un taux de capture de 90% ; dans cet échangeur est produit du CO₂ solide 62 ; cet échangeur peut correspondre à plusieurs types de procédé et de technologie :
   ∘ échangeur de cryocondensation solide en continue dans lequel on produit du CO₂ solide sous forme de neige carbonique que l'on extrait par exemple par une vis et que l'on pressurise pour l'introduire dans un bain de CO₂ liquide 121 à une pression supérieure à celle du point triple du CO₂ ; cette pressurisation peut aussi être réalisée en « batch » dans un système de silos ; cette cryocondensation solide en continue peut être réalisée dans les technologies suivantes :
      ■ échangeur à surface raclée, les racleurs étant par exemple en forme de vis de manière à favoriser l'extraction du solide
      ■ échangeur à lit fluidisé de manière à entraîner la neige carbonique et nettoyer les tubes par des particules par exemple de densité supérieure à celle de la neige carbonique
      ■ échangeur avec extraction de solide par vibrations, ultra-sons, effet pneumatique ou thermique (réchauffement intermittent de manière à la chute de la neige carbonique)
      ■ Accumulation sur une surface lisse, avec une chute périodique « naturelle » dans un bac.
   ∘ échangeur de cryocondensation solide en « batch » : dans ce cas, plusieurs échangeurs en parallèles sont alternativement utilisés pour réaliser la cryocondensation solide du CO₂ puis isolés, pressurisés à une pression supérieure à celle du point triple du CO₂ de manière à liquéfier le CO₂ solide et éventuellement le vaporiser partiellement
- le fluide 46 est réchauffé dans l'échangeur 109 puis éventuellement divisé en 2 parties, une pour régénérer l'unité d'élimination de vapeur résiduelle, l'autre (facultative pour produire de l'eau froide par évaporation dans une tour à contact direct en introduisant un fluide sec 50 qui va se saturer en eau en en vaporisant une partie.
- un cycle avec turbine(s) de détente isentropique produisent le froid entre -100 et - 120°C pour la cryocondensation solide et entre -56°C et -100°C pour compléter le déficit de frigorigènes dans cette partie de l'échangeur 109 ; ce cycle peut être avec un fluide auxiliaire riche en argon ou azote voire être une fraction du fluide 48
- Un bain de CO₂ liquide, 121, dans lequel le CO₂ solide 62, est versé. Le bain continent un dispositif pour assurer l'échange de chaleur avec le fluide 74 qui serait par exemple du CO₂ pur.
- Le CO₂ solide fond dans le bain, et la chaleur latent ainsi que la chaleur sensible sont évacuées par le fluide 72.
- Les frigorigènes dans le fluide 72 peuvent ensuite être utilisés ailleurs dans le procédé.
- Les éléments 111 et 121 forment ensemble une unité de séparation produisant un gaz 44 pauvre en CO₂ et plusieurs fluides riches en CO₂ 66, 68, 70.
- la vaporisation de CO₂ liquide complète l'apport de froid entre 0°C et -56°C à des niveaux de pressions différents (par exemple à deux niveaux, fluides 66 et 68), le fluide 70 étant pressurisé à une pression telle qu'il ne se vaporise pas et n'échange donc que de la chaleur sensible.

## Revendications

1. Procédé de production d'au moins un gaz pauvre en CO₂ (44) et d'un ou plusieurs fluides riches en CO₂ (66, 68, 70) à partir d'un fluide à traiter (40) contenant du CO₂ et au moins un composé plus volatil que le CO₂, mettant en oeuvre au moins les étapes suivantes :
a) refroidissement (109, 112) dudit fluide à traiter (40) ; et
b) séparation (110) dudit fluide (42) refroidi à l'étape a) en ledit gaz pauvre en CO₂ (44) et un ou plusieurs fluides riches en CO₂ (66, 68, 70) ;
dans lequel au moins une partie du refroidissement opéré à ladite étape a) est réalisée par échange de chaleur avec au moins une fraction dudit gaz pauvre en CO₂ (44), dans un ou plusieurs échangeurs régénératifs (112) et **caractérisé en ce que** ladite étape a) comprend les sous-étapes suivantes :
a1) division dudit fluide à traiter (40) en au moins un premier et un deuxième débit (140, 240) ;
a2) refroidissement dudit premier débit (140) dans lesdits échangeurs régénératifs (112) par échange de chaleur avec au moins une fraction du gaz pauvre en CO₂ (44) obtenu à l'étape b) conduisant à un premier débit refroidi (142) et refroidissement dudit second débit (240) dans un échangeur multifluide (109) par échange de chaleur avec au moins une partie des fluides riches en CO₂ (66, 68, 70) obtenus à l'étape b) conduisant à un second débit refroidi (242) ; et
a3) réunion d'au moins ledit premier débit refroidi (142) et ledit second débit refroidi (242) pour former un troisième débit refroidi (42), ledit troisième débit (42) étant envoyé à ladite étape b) de séparation.

2. Procédé selon la revendication 1, **caractérisé en ce que** ledit premier débit (140) obtenu par division à la sous-étape a1) représente au moins 75% en fraction massique dudit fluide à traiter (40).

3. Procédé selon l'une quelconque des revendications 1 à 2, **caractérisé en ce qu'**on ajoute à ladite fraction de gaz pauvre en CO₂ (44) envoyée dans lesdits échangeurs régénératifs (112) un fluide donné (47).

4. Procédé selon l'une quelconque des revendications 1 à 3, **caractérisé en ce que** lesdits échangeurs régénératifs (112) sont à matrices fixes et à circulation radiale.

5. Procédé selon la revendication 4, **caractérisé en ce que** lesdits échangeurs régénératifs (112) contiennent des billes de quartz.

6. Procédé selon l'une quelconque des revendications 1 à 5, **caractérisé en ce que** ladite étape b) est de type cryocondensation liquide ou solide, absorption, adsorption, et/ou perméation.

7. Procédé selon l'une quelconque des revendications 1 à 6, **caractérisé en ce que** lesdits échangeurs régénératifs (112) sont composés de matériaux compatibles avec le mercure.

## Patentansprüche

1. Verfahren zum Herstellen mindestens eines an CO₂ armen Gases (44) und eines oder mehrerer an CO₂ reichen Fluide (66, 68, 70) ausgehend von einem aufzubereitenden Fluid (40), das CO₂ und mindestens eine Verbindung, die flüchtiger als CO₂ ist, enthält, bei dem mindestens die folgenden Schritte ausgeführt werden:
a) Abkühlen (109, 112) des aufzubereitenden Fluids (40); und
b) Trennen (110) des in Schritt a) abgekühlten Fluids (42) in das an CO₂ arme Gas (44) und ein oder mehrere an CO₂ reiche Fluide (66, 68, 70),
bei dem mindestens ein Teil des Abkühlens, das in Schritt a) erfolgt, durch Wärmeaustausch mit mindestens einer Fraktion des an CO₂ armen Gases (44) in einem oder mehreren Regenerativtauschern (112) durchgeführt wird und **dadurch gekennzeichnet ist, dass** Schritt (a) folgende Teilschritte umfasst:
a1) Spalten des aufzubereitenden Fluids (40) in mindestens einen ersten und einen zweiten Fluss (140; 240);
a) Abkühlen des ersten Flusses (140) in den Regenerativtauschern (112) durch Wärmeaustausch mit mindestens einer Fraktion des an CO₂ armen Gases (44), das in Schritt b) erhalten wurde, was zu einem abgekühlten ersten Fluss (142) führt, und Abkühlen des zweiten Flusses (240) in einem Multifluid-Tauscher (109) durch Wärmeaustausch mit mindestens einem Teil der an CO₂ reichen Fluide (66, 68, 70), die in Schritt b) erhalten wurden, was zu einem abgekühlten zweiten Fluss (242) führt; und
a3) Zusammenführen mindestens des abgekühlten ersten Flusses (142) und des abgekühlten zweiten Flusses (242), um einen abgekühlten dritten Fluss (42) zu bilden, wobei der dritte Fluss (42) zu Schritt b) des Trennens geleitet wird.

2. Verfahren nach Anspruch 1, **dadurch gekennzeichnet, dass** der erste Fluss (140), der in Teilschritt a1) durch Spalten erhalten wurde, mindestens 75 % Massenanteil des aufzubereitenden Fluids (40) darstellt.

3. Verfahren nach einem der Ansprüche 1 bis 2, **dadurch gekennzeichnet, dass** der Fraktion des an CO₂ armen Gases (44), die in die Regenerativtauscher (112) geleitet wurde, ein bestimmtes Fluid (47) zugegeben wird.

4. Verfahren nach einem der Ansprüche 1 bis 3, **dadurch gekennzeichnet, dass** die Regenerativtauscher (112) Festmatrix-Tauscher mit Radialzirkulation sind.

5. Verfahren nach Anspruch 4, **dadurch gekennzeichnet, dass** die Regenerativtauscher (112) Quarzkugeln enthalten.

6. Verfahren nach einem der Ansprüche 1 bis 5, **dadurch gekennzeichnet, dass** Schritt b) des Typs flüssige oder feste Kryokondensation, Absorption, Adsorbtion und/oder Permeation ist.

7. Verfahren nach einem der Ansprüche 1 bis 6, **dadurch gekennzeichnet, dass** die Regenerativtauscher (112) aus Materialien bestehen, die quecksilberverträglich sind.

## Claims

1. Method for producing at least one CO₂-lean gas (44) and one or more CO₂-rich fluids (66, 68, 70) from a fluid to be treated (40) which contains CO₂ and at least one compound that is more volatile than CO₂, involving at least the following steps:
a) cooling (109, 112) said fluid to be treated (40); and
b) separating (110) said fluid (42) that was cooled in step a) into said CO₂-lean gas (44) and one or more CO₂-rich fluids (66, 68, 70);
at least some of the cooling carried out in said step a) taking place by heat exchange with at least a fraction of said CO₂-lean gas (44) in one or more regenerative exchangers (112) and **characterised in that** said step a) comprises the following sub-steps:
a1) dividing said fluid to be treated (40) into at least a first and a second flow (140, 240);
a2) cooling said first flow (140) in said regenerative exchangers (112) by heat exchange with at least a fraction of the CO₂-lean gas (44) obtained in step b) resulting in a first cooled flow (142), and cooling said second flow (240) in a multifluid exchanger (109) by heat exchange with at least some of the CO₂-rich fluids (66, 68, 70) obtained in step b) resulting in a second cooled flow (242); and
a3) reuniting at least said first cooled flow (142) and said second cooled flow (242) to form a third cooled flow (42), said third flow (42) being sent to said separation step b).

2. Method according to claim 1, **characterised in that** said first flow (140) obtained by division in sub-step a1) represents at least 75 %, by mass fraction, of said fluid to be treated (40).

3. Method according to either claim 1 or claim 2, **characterised in that** a given fluid (47) is added to said fraction of CO₂-lean gas (44) which is sent into said regenerative exchangers (112).

4. Method according to any of claims 1 to 3, **characterised in that** said regenerative exchangers (112) are fixed matrix and radial circulation regenerative exchangers.

5. Method according to claim 4, **characterised in that** said regenerative exchangers (112) contain quartz beads.

6. Method according to any of claims 1 to 5, **characterised in that** said step b) is of the liquid or solid cryocondensation, absorption, adsorption and/or permeation type.

7. Method according to any of claims 1 to 6, **characterised in that** said regenerative exchangers (112) are composed of materials that are compatible with mercury.
